# DEMANDE DE BREVET EUROPEEN

(11) **EP 2 716 527 A1**
(43) Date de publication de la demande: **09.04.2014**
(21) Numéro de dépôt: 13183550.6
(22) Date de dépôt: 09.09.2013
(51) Int. Cl.: B62D 25/14, B62D 29/04

(54) **Dispositif pour fixer la colonne de direction d'un véhicule automobile à la traverse de planche de bord et à une partie de la structure de la caisse du véhicule**

(30) Priorité: 03.10.2012 FR 1259382
(71) Demandeur: PEUGEOT CITROËN AUTOMOBILES SA, 78140 Velizy-Villacoublay (FR)
(72) Inventeur: Appasamy, Jean Michel, 78760 Jouars Pontchartrain (FR); Hochart, Olivier, 62980 Noyelles Les Vermelles (FR); Dumont, François, 59112 Carnin (FR)

(57) **Abrégé**

Dispositif (11) pour fixer la colonne de direction (12) d'un véhicule automobile à la traverse (13) de planche de bord et à une partie (14) de la structure de la caisse du véhicule, ce dispositif (11) comprenant deux supports espacés (15) fixés sous la traverse (13) de planche de bord et des moyens pour fixer la colonne de direction (12) à ces supports (15), ces supports (15) étant reliés à des bras (16 à 19) s'étendant transversalement par rapport à l'axe de la traverse (13) et dans une direction opposée auxdits supports (15), l'extrémité de ces bras (16 à 19) comportant des moyens pour les fixer à une partie (14) de la structure de la caisse, caractérisé en ce que lesdits bras (16 à 19) sont réalisés à partir d'un tissu en matériau composite mis en forme sous presse et lesdits supports (15) sont constitués par deux pièces en matière thermoplastique surmoulées à une extrémité desdits bras (16 à 19).

## Description

La présente invention concerne un dispositif pour fixer la colonne de direction d'un véhicule automobile à la traverse de planche de bord et à une partie de la structure de la caisse du véhicule.

L'invention concerne également un véhicule automobile comprenant une traverse de planche de bord, une colonne de direction et une traverse inférieure de baie de pare-brise, **caractérisé en ce que** la colonne de direction est fixée à la traverse de planche de bord et cette traverse est fixée à la traverse inférieure de baie de pare-brise grâce à un dispositif de fixation selon l'invention.

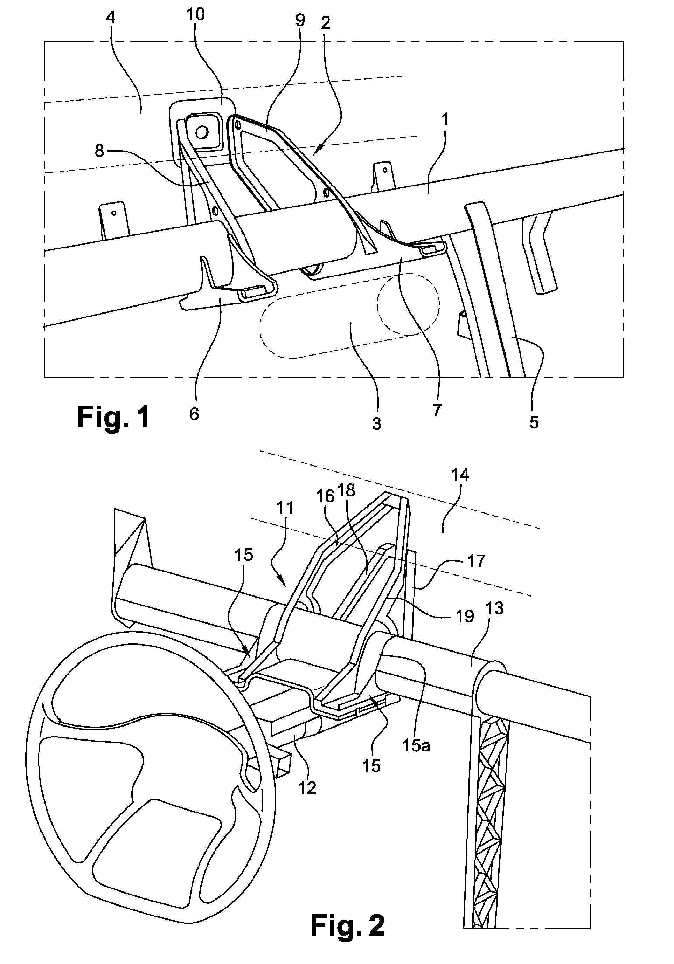

La figure 1 représente partiellement en perspective une traverse de planche de bord 1 et un dispositif 2 pour fixer la colonne de direction 3 (représentée en pointillés) à la traverse de planche de bord 1 et à une partie 4, également représentée en pointillés, de la structure de la caisse du véhicule.

La traverse de planche de bord 1 est un tube en acier qui est fixé à la caisse du véhicule par des moyens autres que le dispositif 2 qui ne seront pas décrits ici.

La traverse 1 est également soutenue par une jambe de force 5.

La partie 4 de la caisse à laquelle est fixée le dispositif 2 est généralement la traverse inférieure de la baie du pare-brise, qui s'étend parallèlement à la traverse 1 de planche de bord, au-dessus et devant cette dernière.

Le dispositif de fixation 2 est entièrement constitué de pièces métalliques.

Dans l'exemple représenté sur la figure 1, le dispositif de fixation 2 comprend deux supports 6, 7 espacés fixés sous la traverse de planche de bord 1 et des moyens (non représentés) pour fixer la colonne de direction 3 à ces supports 6, 7 de façon que l'axe de cette colonne 3 s'étende sous la traverse 1 transversalement par rapport à l'axe de cette traverse 1.

Les supports 6, 7 sont reliés à des bras 8, 9 s'étendant transversalement par rapport à l'axe de la traverse 1 et dans une direction opposée aux supports 6, 7.

L'extrémité des bras 8, 9 porte une plaque 10 destinée à être fixée à la partie 4 de la structure de la caisse.

La structure métallique du dispositif de fixation 1 présente une bonne tenue lors des essais normalisés de chocs frontaux et latéraux du véhicule.

Par ailleurs, cette structure permet à la colonne de direction de vibrer à des fréquences supérieures à 41 Hz.

L'inconvénient du dispositif de fixation 2 est qu'il présente une masse élevée et est composé de plusieurs pièces, ce qui augmente les temps de montage.

Le but de la présente invention est de remédier à ces inconvénients.

Ce but est atteint, selon l'invention, grâce à un dispositif pour fixer la colonne de direction d'un véhicule automobile à la traverse de planche de bord et à une partie de la structure de la caisse du véhicule, ce dispositif comprenant deux supports espacés fixés sous la traverse de planche de bord et des moyens pour fixer la colonne de direction à ces supports, ces supports étant reliés à des bras s'étendant transversalement par rapport à l'axe de la traverse et dans une direction opposée auxdits supports, l'extrémité de ces bras comportant des moyens pour les fixer à une partie de la structure de la caisse, **caractérisé en ce que** lesdits bras sont réalisés à partir d'un tissu en matériau composite mis en forme sous presse et lesdits supports sont constitués par deux pièces en matière thermoplastique surmoulées à une extrémité desdits bras.

Ainsi, le dispositif de fixation selon l'invention est constitué par des bras en tissu composite mis en forme sous pression et par deux supports de colonne en matière thermoplastique surmoulés à ces bras de façon à obtenir une pièce unique nettement plus légère que le dispositif métallique connu et plus facile à monter sur le véhicule.

Le tissu composite utilisé pour créer les bras de fixation du dispositif est un tissu en fibres imprégné de matière plastique que l'on met en forme sous presse avant durcissement de la matière plastique.

Le surmoulage entre les deux supports pour fixer la colonne de direction et les bras ci-dessus permet d'obtenir une liaison qui résiste aux chocs évoqués plus haut.

Dans une version préférée de l'invention, chacune des deux pièces en matière thermoplastique desdits supports comprend une première partie en forme de bague destinée à être engagée sur le tube constituant la traverse et une seconde partie en forme de plaquette moulée d'une seule pièce avec la première partie, la colonne de direction étant destinée à être fixée entre les deux seconde parties et sous celles-ci.

La partie en forme de bague facilite le montage de chacune des pièces puisqu'il suffit d'engager cette partie en forme de bague sur le tube qui constitue la traverse.

De préférence également, lesdits bras du dispositif selon l'invention comprennent deux parties en forme de U dont la base est destinée à être fixée à ladite partie de la structure de la caisse et l'extrémité des bras formés par les parties en U, opposée à la base, est reliée par surmoulage à l'une des deux pièces en matière thermoplastique desdits supports.

Ces deux parties en forme de U reliées par surmoulage à chacune des deux pièces en matière plastique servant à fixer la colonne de direction permettent d'obtenir un ensemble d'une seule pièce ayant une masse faible et une résistance aux efforts élevée.

Dans un mode de réalisation particulièrement avantageux de l'invention, l'extrémité des deux parties du U comprend des parties qui sont en contact avec l'intérieur et l'extérieur des parties en forme de bague et des parties en forme de plaquette desdits supports en matière thermoplastique.

Cette disposition permet d'obtenir une excellente liaison par surmoulage entre les deux parties du U et la partie en forme de bague.

De préférence, les deux parties en forme de U formant les bras sont situées dans deux plans sensiblement parallèles.

De préférence également, les bras comportent chacun une nervure de renforcement.

Selon un autre aspect, l'invention concerne une traverse de planche de bord, une colonne de direction et une traverse inférieure de baie de pare-brise, **caractérisé en ce que** la colonne de direction est fixée à la traverse de planche de bord et cette traverse est fixée à la traverse inférieure de baie de pare-brise grâce à un dispositif de fixation selon l'invention.

D'autres particularités et avantages de l'invention apparaîtront encore tout au long de la description ci-après.

Aux dessins annexés, donnés à titre d'exemples, non limitatifs :
- la figure 2 est une vue en perspective d'un dispositif de fixation selon l'invention permettant de fixer une colonne de direction à une traverse de planche de bord et à une partie de la caisse d'un véhicule automobile,
- la figure 3 est une vue en perspective du dispositif de fixation, représenté sur la figure 2, avant son montage sur la traverse et avant fixation de la colonne de direction,
- la figure 4 est une vue d'une partie du dispositif selon l'invention comprenant deux bras de forme en U,
- la figure 5 est une vue des deux pièces comportant une partie en forme de bague du dispositif selon l'invention.

La figure 2 représente un dispositif 11 pour fixer la colonne de direction 12 d'un véhicule automobile à la traverse de planche de bord 13 et à une partie 14 de la structure de la caisse du véhicule.

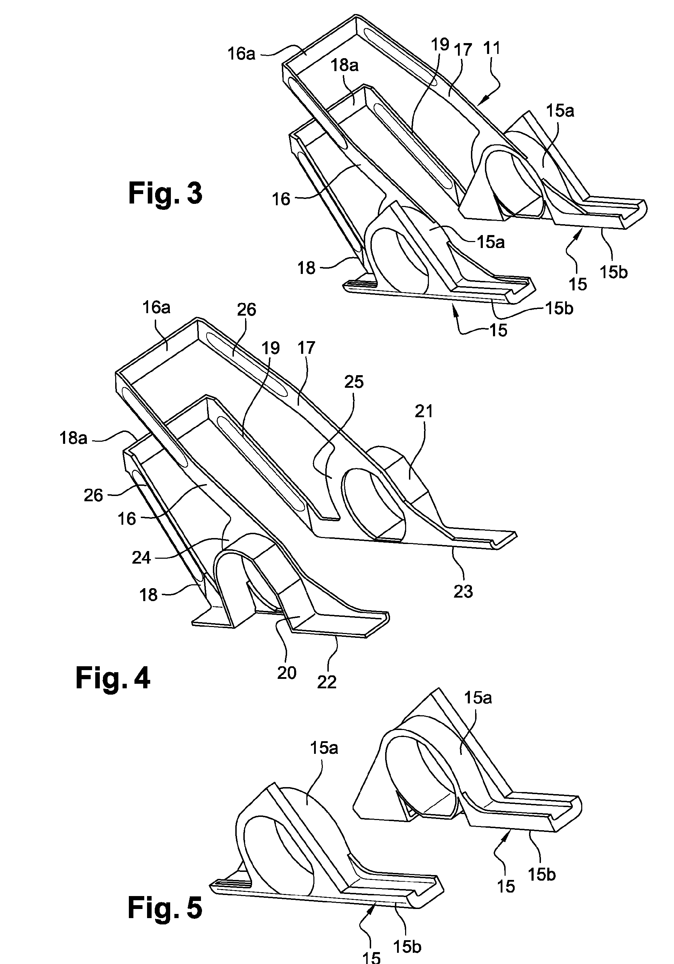

Le dispositif 11 comprend (voir également la figure 3) deux supports espacés 15 destinés à être fixés sous la traverse de planche de bord 13 et des moyens pour fixer la colonne de direction 12 à ces supports 15, de façon que l'axe de cette colonne 12 s'étende, comme montré sur la figure 2, sous la traverse 13 transversalement par rapport à l'axe de cette traverse.

Les deux supports 15 sont reliés à des bras 16, 17, 18, 19 s'étendant transversalement par rapport à l'axe de la traverse 13 et dans une direction opposée aux deux supports 15.

L'extrémité de ces bras 16, 17, 18, 19 comporte des moyens (non représentés) pour les fixer à la partie 14 de la structure de la caisse.

Cette partie 14 est par exemple constituée par la traverse inférieure de la baie du pare-brise.

Conformément à l'invention, les bras 16 à 19 sont réalisés à partir d'un tissu en matériau composite mis en forme sous presse et les deux supports 15 sont constitués par deux pièces en matière thermoplastique surmoulées à une extrémité des bras 16 à 19.

La figure 4 représente les bras 16 à 19 tels qu'obtenus après mise en forme dans une presse d'un tissu composite.

Ce tissu composite est constitué de fibres synthétiques, imprégné de matière thermoplastique.

La figure 5 représente les deux supports 15 avant surmoulage de la matière plastique qui les compose sur l'extrémité des bras 16 à 19 de l'ensemble en tissu composite, représenté sur la figure 4, pour obtenir le dispositif de fixation 11 représenté sur la figure 3.

Cette figure 3 montre que chacune des deux pièces 15 en matière thermoplastique comprend une première partie 15a en forme de bague destinée à entourer le tube constituant la traverse 13 et une seconde partie 15b en forme de plaquette moulée d'une seule pièce avec la première partie 15a.

La colonne de direction 12 est destinée à être fixée entre les deux seconde parties 15b et sous celles-ci, comme montré sur la figure 2, à l'aide de moyens non représentés qui sont à la portée des connaissances de l'homme du métier.

Comme montré par les figures 2, 3, 4 les bras 16 à 19 sont constituées par deux parties en forme de U dont la base 16a, 18a est destinée à être fixée à la partie 14 de la structure de la caisse.

L'extrémité de chacun des deux bras 16, 17, 18, 19 formés par le U, opposée à la base 16a, 18a, est reliée par surmoulage à l'une des deux pièces 15a, 15b en matière thermoplastique.

En outre, l'extrémité des deux bras 16, 17, 18, 19 comporte des parties qui sont liées par surmoulage avec les deux supports 15 en matière thermoplastique.

Ces parties comprennent :
- deux parties 20, 21 en forme d'arc de cercle qui sont engagées respectivement dans les deux parties 15a en forme de bague des supports 15 ;
- deux bordures planes 22, 23 perpendiculaires aux bras 16 à 19 qui viennent s'appliquer sous les plaquettes 15b des deux supports 15 ;
- des élargissements 24, 25 des bras 16 et 17 qui viennent s'appliquer latéralement contre les parties 15a en forme de bague.

Ainsi les parties 20, 21, 22, 23, 24, 25 solidaires des extrémités des bras 16 à 19 présentent une importante surface de contact avec les supports 15, de sorte que le surmoulage de ces supports avec les bras permet d'obtenir un dispositif de fixation 11 présentant une grande résistance aux chocs.

Cette résistance est due également à la présence du tissu au sein de la matière thermoplastique.

Les figures 3 et 4 montrent également que les deux parties en forme de U qui forment les bras 16, 17 et 18, 19 sont situées dans deux plans sensiblement parallèles et que les bras présentent des nervures de renforcement 26.

Les quatre bras 16 à 19 forment ensemble un parallélépipède qui présente une grande résistance aux efforts de flexion, de torsion et de compression.

Le dispositif de fixation 11 présente en outre l'avantage d'être beaucoup plus léger que le dispositif en acier représenté sur la figure 1.

De plus, le dispositif de fixation 11 filtre très bien les vibrations de la colonne de direction 12.

## Revendications

1. Dispositif (11) pour fixer la colonne de direction (12) d'un véhicule automobile à la traverse (13) de planche de bord et à une partie (14) de la structure de la caisse du véhicule, ce dispositif (11) comprenant deux supports espacés (15) fixés sous la traverse (13) de planche de bord et des moyens pour fixer la colonne de direction (12) à ces supports (15), ces supports (15) étant reliés à des bras (16 à 19) s'étendant transversalement par rapport à l'axe de la traverse (13) et dans une direction opposée auxdits supports (15), l'extrémité de ces bras (16 à 19) comportant des moyens pour les fixer à une partie (14) de la structure de la caisse, **caractérisé en ce que** lesdits bras (16 à 19) sont réalisés à partir d'un tissu en matériau composite mis en forme sous presse et lesdits supports (15) sont constitués par deux pièces en matière thermoplastique surmoulées à une extrémité desdits bras (16 à 19).

2. Dispositif selon la revendication 1, **caractérisé en ce que** chacune des deux pièces en matière thermoplastique desdits supports (15) comprend une première partie (15a) en forme de bague destinée à être engagée sur le tube constituant la traverse (13) et une seconde partie (15b) en forme de plaquette moulée d'une seule pièce avec la première partie (15a), la colonne de direction (12) étant destinée à être fixée entre les deux seconde parties (15b) et sous celles-ci.

3. Dispositif selon la revendication 2, **caractérisé en ce que** lesdits bras (16 à 19) sont constitués par deux parties en forme de U dont la base (16a, 18a) est destinée à être fixée à ladite partie (14) de la structure de la caisse et l'extrémité des bras (16 à 19) formés par les parties en U, opposée à la base (16a, 18a), est reliée par surmoulage à l'une des deux pièces en matière thermoplastique desdits supports (15).

4. Dispositif selon la revendication 3, **caractérisé en ce que** l'extrémité des deux parties du U comprend des parties (20, 21, 22, 23, 24, 25) qui sont en contact avec l'intérieur et l'extérieur des parties (15a) en forme de bague et des parties (15b) en forme de plaquette desdits supports (15) en matière thermoplastique.

5. Dispositif selon l'une des revendications 3 ou 4, **caractérisé en ce que** les deux parties en forme de U formant les bras (16 à 19) sont situées dans deux plans sensiblement parallèles.

6. Dispositif selon l'une des revendications 3 à 5, **caractérisé en ce que** les bras (16 à 19) comportent chacun une nervure de renforcement (26).

7. Véhicule automobile comprenant une traverse (13) de planche de bord, une colonne de direction (12) et une traverse inférieure (14) de baie de pare-brise, **caractérisé en ce que** la colonne de direction (12) est fixée à la traverse (13) de planche de bord et cette traverse (13) est fixée à la traverse inférieure (14) de baie de pare-brise grâce à un dispositif de fixation (11) selon l'une des revendications 1 à 6.
